# EUROPEAN PATENT SPECIFICATION

(11) **EP 2 019 802 B1**
(45) Date of publication and mention of the grant of the patent: **02.03.2011**
(21) Application number: 07747434.4
(22) Date of filing: 14.05.2007
(51) Int. Cl.: B65G 19/26, B65G 47/08, B65G 47/76

(54) **POSITIONING APPARATUS**
POSITIONIERVORRICHTUNG
APPAREIL DE POSITIONNEMENT

(30) Priority: 12.05.2006 EP 06076043
(43) Date of publication of application: 04.02.2009
(73) Proprietor: FPS Food Processing Systems B.V., 2631 RE Nootdorp (NL)
(72) Inventor: DOPPENBERG, Gerrit, NL-3881 ST Putten (NL)
(74) Representative: Hatzmann, Martin
(86) International application number: PCT/NL2007/050210
(87) International publication number: WO 2007/133078

(56) References cited:
- JP-A- 2001 233 443
- US-A- 3 166 181

## Description

The present invention relates to an apparatus for moving substantially block-shaped products from a continuous stream of such products on a first conveyor, to a second conveyor, in order to therewith form patterns of these products, wherein the products are carried along in a conveying plane on the first conveyor by advancing elements at a fixed distance above this conveying plane in a conveying direction T.

Such an apparatus is known from NL1025432 of applicant. In this specification, an endless conveyor with advancing elements, provided as a paternoster, is, successively, above a portion of a first conveyor, then above a second conveyor designed as track of freely rotating roller axles, and, further downstream, above a portion of a third conveyor. The second conveyor or track mentioned functions as buffer track. The combination of this assembly of conveyors with the advancing elements thereabove enables the formation of continuous rows of products, in the present case, typically, packaging units, while thus formed patterns of rows can be packaged in so-called outer boxes.

However, with such a combination of conveyors it is impossible to compose patterns other than uniform rows of successive products, such as packaging units

An apparatus for rotating products such as packaging units during conveying is known from DE10123081. Here too, patterns of mutually rotated products are formed. However, the products are carried along by the belt and not by advancing elements. In particular, a turnstile is described arranged at a well-defined location next to the conveyor. This means not only an additional unit next to the conveyor, but also, the conveying velocity of the conveyor, the size of the product and the time path of the rotational movement for each following product must be accurately geared to each other, which requires complex control. In this document is has not been indicated either in which manner patterns can be composed of rotated products or non-rotated products.

Further, a pattern former for packaging units of applicant is known from EP1246767, wherein patterns, similar to those mentioned and desired hereinabove, can be composed. This apparatus is equipped with grippers that grip each unit and which, then, themselves, translate and rotate in the correct direction. It will be clear to any person skilled in the art that this apparatus with gripper guide and gripper control is much more complex and takes up much more space. Further, US 3,166,181 discloses a conveying apparatus, having an article feeding conveyor and an article receiving conveyor, the latter being movable in a path which intersects and is at angles to the path of the feeding conveyor. A transferring mechanism that includes advancing elements attached to pain of endless claims to push the articles from the feeding conveyor to the receiving conveyor, along a path which extends diagonally with respect to each of the conveyors, wherein each advancing element comprises a hinge arm with a hinge arm device.

In order to remedy this shortcoming, the invention provides an apparatus for moving substantially block-shaped products from a continuous stream of such products on a first conveyor, to a second conveyor in order to thus form patterns of the products mentioned, while the products are carried along by advancing elements on the first conveyor in a conveying plane at a fixed distance above this conveying plane in a conveying direction T, **characterised in that** each advancing element further comprises a hinge arm with a hinge arm drive,
wherein the hinge arm is provided at the downstream side of such an advancing element,
wherein such a hinge arm is rotatable in a plane substantially parallel to said conveying plane, and about a hinge arm pivot located on one of the sides of said first conveyor,
wherein the products are slid away sideways, from the first conveyor onto the second conveyor and have then been rotated through an angle of approximately 90°,
wherein the said second conveyor is provided at least partly and substantially at the same height adjacent the first one, on the above-mentioned side, and wherein further, a pattern control unit is comprised for controlling at least the hinge arm drive for composing desired combinations therewith of m products, carried along only in the conveying direction T, and n products slid sideways and rotated, with m and n being natural numbers, each ≥ 0.

With great advantage, it is possible to thus compose several types of patterns with similar conveyors.

In further embodiments, the apparatus is **characterized in that**
the hinge arm drive comprises a crank drive;
the hinge arm and the crank drive are comprised in the same advancing element housing, while the advancing element housing is formed as a strip-shaped body perpendicular to the conveying direction T;
the crank drive comprises a connecting rod and a pusher rod,
wherein the pusher rod extends in the perpendicular direction mentioned and is reciprocally movable between a position of rest and a pushing away position, and
wherein the connecting rod is rotatably connected, by one end, to the pusher rod and, by the other end, about a connecting rod pivot on the hinge arm, wherein, for the other end mentioned, the corresponding connecting rod pivot on the pivot arm is located downstream relative to the hinge arm pivot;
in case of rotation, upon the reciprocal movement mentioned, the end of the pusher rod remote from the connecting rod is guided along a curve while a leading profile and an outfeed profile are successively followed;
each of these profiles is arranged on a lifting table which can be raised for following the profile, and vice versa;
the profiles are wedge-shaped, with the leading profile diverging in a wedge-shape and the outfeed profile tapering into a point-shape;
further, a guiding pusher is comprised, which is controlled by the pattern control unit and which allows the block-shaped products to be rotated in a direction opposite the rotational direction obtained by such a hinge arm;
the guiding pusher comprises at least a single vertical plate piece that can be positioned diagonally at a well-defined distance above the conveying plane of said first conveyor in the continuous stream;
the guiding pusher comprises four plate parts which can each be positioned separately, while accordingly, for successive products, a desired separate rotation and/or passage is obtained; and
the pattern control unit further controls the velocities of the conveyors mentioned.

With great advantage, a positioning apparatus for composing patterns is obtained which can translate and rotate block-shaped products supplied in rows, so that each desired pattern can be formed while even the manner the block-shaped products are printed is taken into account, while, each time, a desired view side can be obtained. In particular, this positioning apparatus offers the possibility to compose patterns which are placed on, for instance, a pallet that is directly suitable for use in a shop.

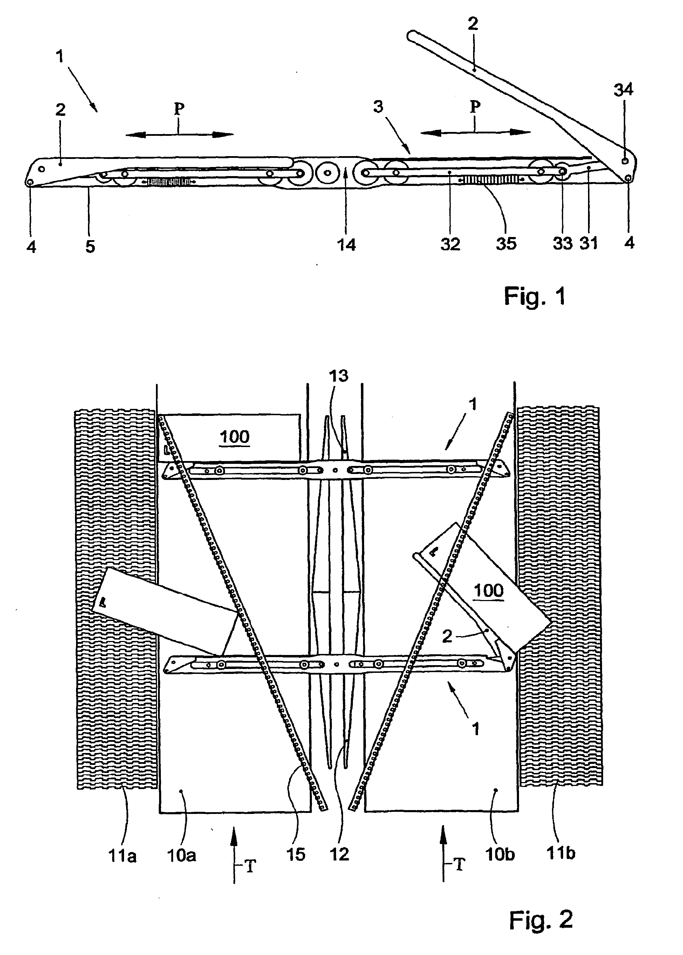

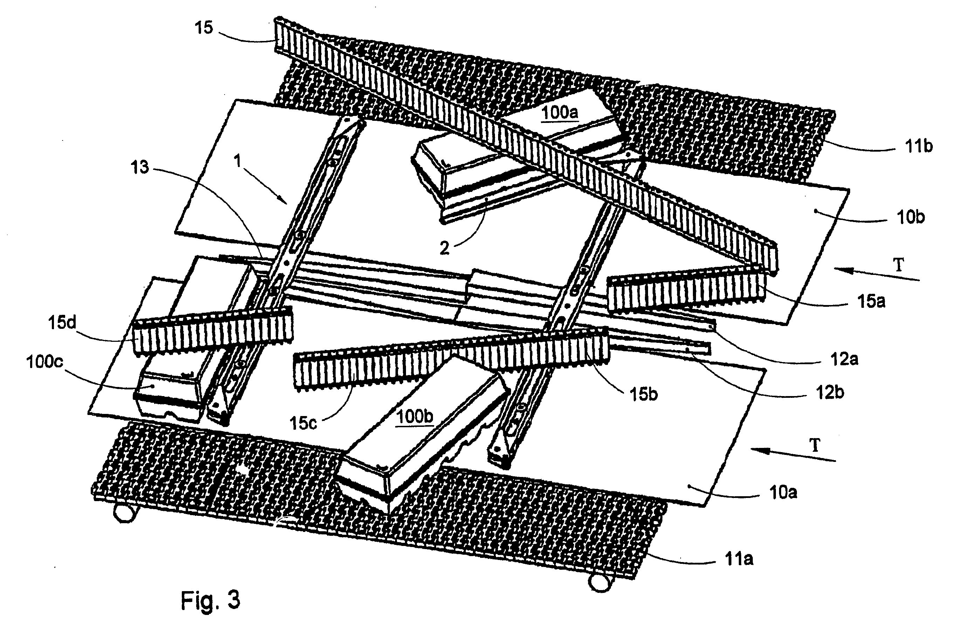

Further details and particulars will be described and elucidated hereinbelow on the basis of a few Figures,
wherein Fig. 1 shows an advancing element according to the present invention;
wherein Fig. 2 schematically shows a top plan view of a part of a conveying track with, in particular, the apparatus according to the present invention, and
wherein Fig. 3 gives a perspective view of the part of the conveying track according to Fig. 2.

In these Figures, the same parts have the same reference numerals.

In the view according to Fig. 2, block-shaped products 100, in particular packaging units or packaging boxes for eggs, are supplied in a continuous stream in a conveying direction T on a first conveyor 10, by, in the situation drawn, two first conveyors 10a, b situated side by side. In the represented situation, this carrying along is effected by advancing elements 1 which carry along the products 100 on a track with a conveying surface of freely rotating rollers, while the advancing elements 1 are disposed somewhat above the conveying surface, and carry the products along while pushing against the upstream side of the products, with the combination of rollers and pushers utilized here composing the first conveyors 10a, b. In order to form patterns wherein the products are to be rotated a quarter turn, the apparatus according to the invention comprises advancing elements 1, one of which is represented in further detail in Fig. 1.

Such an advancing element 1 has, on its downstream side, a hinge arm 2 which can rotate about a hinge arm pivot 4 by means of a hinge arm drive 3. As a result, a product is simultaneously rotated and slid sideways onto an adjoining second conveyor 11 located at approximately the same height, with, accordingly, in the situation drawn, two adjoining second conveyers 11a, b. In the represented exemplary embodiment, this hinge drive 3 is a crank drive. In the present exemplary embodiment, the represented second conveyors 11a, b are endless conveyors, for instance conveyor belts with belts of suitable material, on which the products find a place and are carried along.

This crank drive comprises, in particular, a connecting rod 31 and a pusher rod 32 which are mutually coupled by a pusher rod connecting axle 33, while the connecting rod 31 and the hinge arm 2 are interconnected at the location of a connecting rod joint 43, for instance a vertical axle. The location of the joint 34 is chosen such that, upon pushing, the advancing element 1 rotates forward, which is effected through a location of pivot 34 downstream relative to the hinge arm pivot 4. It will be clear to any person skilled in the art that with an upstream location, the same rotation can be obtained by pulling. Further, other generally known rotation constructions can be utilized, for instance with magnets or, also, small motors. It is further indicated in Fig. 1 how the respective parts are accommodated in a strip-shaped advancing element housing 5, while, for the folded-in situation, the whole is typically directed perpendicularly to the conveying direction T. With such a drive, the pusher rod 32 is moved to and fro according to a direction P, while the hinge arm swerves out and moves back again. In order to move the pusher rod 32, the end remote from the connecting rod is guided along a profile, i.e. a leading profile 12 for a forward rotating hinge arm 2, and an outfeed profile 13 for a returning hinge arm 2.

More particularly, it is indicated in Fig. 3 that a leading profile 12a is raised in the path of the advancing element and then contacts the pusher rod 32 in a profile passage 14. In this embodiment, the leading profile 12 is wedge-shaped. The outfeed profile 13 is also wedge-shaped but here, is point-shaped in the downstream direction, and can also be raised while the hinge arm 2 is gradually moved back by a tension spring 35. As a rule, the vertical movement is a lifting movement, utilizing, for instance, lifting elements in a lifting table block.

In Figs. 2 and 3, further, guiding pushers 15 are shown. They enable rotation of the product in a direction opposite the direction of rotation obtained with a hinge arm 2. In the Figure, rotational directions can be told from squares in the corners of the top surfaces of these products 100.

These guiding pushers 15 according to the present exemplary embodiment are designed as plate pieces or plate-shaped material pieces and, more particularly, are built up from segments 15a,b,c,d, running diagonally above the first conveyors 10, and can be vertically moved to and fro, segmentwise, in the continuous stream of products. In particular, suitable materials will be chosen for carrying out the pushing movement in the desired manner, while in particular frictional characteristics of the materials of the respective material pieces are taken into account. In particular plastics which can be used for the above-mentioned egg boxes require a well defined choice. Furthermore, a combination of pushing and moving can be required while the products are simultaneously rotated and moved in two directions. In the represented exemplary embodiment, to that end, rollers of suitable plastic are used, running free in vertical direction.

With the above-mentioned combination of advancing elements 1 and guiding pushers 15, successive products may or may not be rotated, and further also a quarter turn to the left or a quarter turn to the right. This is achieved by a pattern control unit, typically, a computer carrying out a preset signal sequence.

With such a control unit, for the situation shown in Figs 2 and 3, the following movements, or combinations thereof, can be carried out, while for the sake of clarity, squares are indicated on the top surfaces of the products 100a,b,c:
- rotating and sliding products 100 with a hinge arm 2; this means, viewed in the conveying direction T, rotating a product to the right on conveyor 10b, with the square ending up downstream, on the left front side in the case of the represented product 100b; for a product 100a on conveyor 10a this would result in a rotation and sliding movement to the left, with the square ending up upstream at the right rear side; as indicated hereinabove, in case of rotation, the profiles will have to be raised in time;
- when only rotating and sliding with a hinge arm 2, the guiding pushers 15, in particular one or several segments 15a,b,c,d should not be in the way and should be in the raised position; in the represented situation, above the conveyor 10b, all segments are in the raised position, while above conveyor 10a only the segments 15a and 15d are in the raised position;
- if a reversed rotation is desired, as represented, for instance, for a product 100a on conveyor 10a in Fig. 3, then, the desired segments, in this case the segments 15b,c, are lowered and the product 100b supplied in the direction T and carried along by advancing element 1 in closed condition will contact segment 15b; product 100b is then carried along by, simultaneously, the advancing element 1 and the above-mentioned vertical rollers, and then ends up, with a first part, on the adjoining conveyor 11a; for this conveyor 11a, a suitable surface material is selected, for instance rough with suitable frictional properties, and further, a velocity is set that carries the part mentioned along more rapidly than the trailing ground surface part, so that the rotation represented in Fig. 3 is obtained;
it will be clear to any person skilled in the art that in a similar manner, all sorts of manners of positioning such products are possible.

It will be clear to any person skilled in the art that, both when allowing a passage and when rotating with the guiding pushers 15, depending on the requirements of the pattern to be formed, the segments are raised and lowered in the correct order while this is controlled by the pattern control unit.

In further exemplary embodiments according to the present invention, several guiding pusher combinations can be utilized, for instance when pushing at two corners of a product gives a suitable rotation. Furthermore, the rollers in the segments can be driven, or also, the guiding pushers can be set at different angles. In a still further embodiment, the profiles can be designed as switches.

Not further discussed are, for instance, different types of conveyors and further types of motors and drives for the various moving pieces and parts, which are understood to fall within the protective scope of the appended claims.

## Claims

1. An apparatus for moving substantially block-shaped products (100) from a continuous stream of such products on a first conveyor (10), to a second conveyor (11) in order to therewith form patterns of the said products, wherein the products (100) are carried along in a conveying plane on the first conveyor (10) by advancing elements (1) moving at a fixed distance above this conveying plane in a conveying direction T,
**characterised in that** each advancing element (1) further comprises a hinge arm (2) for pushing a product on the converying plane and a hinge arm drive (3) for rotating the hinge arm (2) about a hinge pivot (4);
wherein the hinge arm (2) is provided at the downstream side of such an advancing element (1),
wherein such a hinge arm (2) is rotatable in a plane substantially parallel to said conveying plane, and about the hinge arm pivot (4) located on one of the sides of the said first conveyor (10), so that, as a result of the rotatian of the hinge anm (2), the products (100) are slid away sideways, from the first conveyor (10) onto the second conveyor (11) and have then been rotated through an angle of approximately 90°, wherein the said second conveyor (11) is provided at least partly and substantially at a same height adjacent the first one, on the above-mentioned side, and
wherein further, a pattern control unit is comprised for controlling at least the hinge arm drive (3) for composing desired combinations therewith of m products, carried along only in conveying direction T, and n products slid sideways and rotated, with m and n being natural numbers, each ≥ 0.

2. An apparatus according to claim 1, wherein the hinge arm drive (3) comprises a crank drive.

3. An apparatus according to claim 2, wherein the hinge arm (2) and the crank drive (3) are comprised in the same advancing element housing while the advancing element housing is formed as a strip-shaped body perpendicular to the conveying direction T.

4. An apparatus according to claim 3, wherein the crank drive (3) comprises a connecting rod (31) an a pusher rod (32),
wherein the pusher rod (32) extends in the said perpendicular direction and is reciprocally movable between a position of rest and a pushing away position, and wherein the connecting rod (31) is rotatably connected, by one end, to the pusher rod and the other end, about a connecting rod pivot on the hinge arm, wherein for said other end, the corresponding connecting rod pivot is located on the hinge arm downstream relative to said hinge arm pivot.

5. An apparatus according to claim 4, wherein, in case of rotation, upon said reciprocal movement, the end of the pusher rod (32) remote from the connecting rod (31) is guided along a curve while a leading profile (12) and an outfeed profile (13) are successively followed.

6. An apparatus according to claim 5, wherein each of the said profiles (12, 13) is arranged on a lifting table which can be raised for following the profile, and vice versa.

7. An apparatus according to any one of claims 5 or 6, wherein the profiles (12, 13) are wedge-shaped, with the leading profile diverging in a wedge-shape and the outfeed profile tapering into a point.

8. An apparatus according to any one of the preceding claims, wherein further, a guiding pusher (15) is comprised which is controlled by the pattern control unit and which allows rotation of the block-shaped products in a direction opposite the direction of rotation obtained by such a hinge arm.

9. An apparatus according to claim 8, wherein the guiding pusher (15) comprises at least a single vertical plate piece which can be positioned diagonally at a well-defined distance above the conveying surface of said first conveyor (10) in said continuous stream.

10. An apparatus according to claim 9, wherein the guiding pusher (15) comprises four plate pieces which can each be positioned separately while accordingly, for successive products, a separate desired rotation and/or passage is obtained.

11. An apparatus according to any one of the preceding claims, wherein the pattern control unit further controls the speeds of said conveyors (10, 11).

12. Use of an apparatus according to any of the preceding claims for moving substantially block-shaped products (100) from a continuous stream of such products on a first conveyor (10), to a second conveyor (11) in order to therewith form patterns of the said products.

13. Use according to claim 12 wherein the products are block-shaped products (100), in particular packaging units or packaging boxes for eggs.

## Patentansprüche

1. Vorrichtung zum Verlagern im Wesentlichen blockförmiger Produkte (100) aus einem kontinuierlichen Strom derartiger Produkte auf einem ersten Förderer (10) auf einen zweiten Förderer (11), um auf diese Weise musterartige Anordnungen derartiger Produkte zu bilden, wobei die Produkte (100) auf dem ersten Förderer (10) in einer Förderebene durch Vorschubelemente (1) vorwärts bewegt werden, die sich in einem festen Abstand oberhalb der Förderebene in einer Förderrichtung T bewegen,
**dadurch gekennzeichnet,**
**dass** jedes Vorschubelement (1) einen Schwenkarm (2) zum Vorschieben eines Produktes auf der Förderebene und einen Schwenkarmantrieb (3) zum Schwenken des Schwenkarms (2) um einen Schwenkzapfen (4) aufweist;
wobei der Schwenkarm (2) auf der stromabwärts gelegenen Seite eines solchen Vorschubelements (1) gelegen ist,
wobei ein derartiger Schwenkarm (2) in einer zur Förderebene im Wesentlichen parallelen Ebene und um den Schwenkzapfen (4) schwenkbar ist, der auf einer der Seiten des ersten Förderers (10) gelegen ist, so dass als Ergebnis der Verschwenkung des Schwenkarms (2) die Produkte (100) seitwärts von dem ersten Förderer (10) auf den zweiten Förderer (11) verschoben und dabei um einen Winkel von ungefähr 90 Grad gedreht werden,
wobei der zweite Förderer (11) zumindest teilweise und im wesentlichen auf der gleichen Höhe dem ersten benachbart auf der vorerwähnten Seite vorgesehen ist und
wobei eine Mustersteuereinheit zur Steuerung mindestens des Schwenkarmantriebs (3) zur Zusammenstellung gewünschter Kombinationen mittels diesem von m Produkten vorhanden ist die nur in der Förderrichtung T mitgenommen werden, und von n Produkten, die seitwärts geschoben und gedreht werden, worin m und n natürliche Zahlen jeweils ≥0 sind.

2. Vorrichtung nach Anspruch 1, bei dem der Schwenkarmantrieb (3) einen Kurbeltrieb umfasst.

3. Vorrichtung nach Anspruch 2, bei dem der Schwenkarm (2) und der Kurbeltrieb (3) in dem selben Vorschubeiementgehäuse angeordnet sind, wobei das Vorschubelementgehäuse als streifenförmiger Körper senkrecht zur Förderrichtung T ausgebildet ist.

4. Vorrichtung nach Anspruch 3, bei dem der Kurbeltrieb (3) eine Verbindungsstange (31) und eine Schubstange (32) umfasst, wobei die Schubstange (32) in der erwähnten senkrechten Richtung sich erstreckt und zwischen einer Ruheposition und einer Wegschiebeposition hin und her bewegbar ist und wobei die Verbindungsstange (31) an einem Ende drehbar mit der Schubstange und am anderen Ende um einen Verbindungsstangenzapfen drehbar mit dem Schwenkarm verbunden ist, und wobei an dem anderen Ende der entsprechende Verbindungsstangenzapfen an dem Schwenkarm stromabwärts des Schwenkarmzapfens angeordnet ist.

5. Vorrichtung nach Anspruch 4, wobei im Falle einer Drehung bei der erwähnten Hin- und Herbewegung das der Verbindungsstange (31) abgelegene Ende der Schubstange (32) entlang einer Kurve geführt wird, wobei ein voreilendes Profil (12) und ein Ausgabe-Profil (13) nacheinander abgefahren werden.

6. Vorrichtung nach Anspruch 5, bei der jedes der beiden Profile (12, 13) auf einem Hubtisch angeordnet ist, der zum Nachfahren des Profils angehoben werden kann und umgekehrt.

7. Vorrichtung nach einem der Ansprüche 5 oder 6, wobei die Profile (12, 13) keilförmig sind, wobei das voreilende Profil in einer Keilform sich verbreitert und das Ausgabe-Profil sich keilförmig auf einen Punkt hin verengt.

8. Vorrichtung nach einem der vorangehenden Ansprüche, bei der zusätzlich ein Führungsschieber (15) vorgesehen ist, der durch die Mustersteuereinheit gesteuert wird und die Drehung der blockförmigen Produkte in einer Richtung entgegen der Drehrichtung erlaubt, die durch einen derartigen Schwenkarm erhalten wird.

9. Vorrichtung nach Anspruch 8, bei der der Führungsschieber (15) mindestens ein einzelnes vertikales Plattenglied umfasst, welches in einer wohl definierten Entfernung oberhalb der Förderfläche des ersten Förderers (10) in dem kontinuierlichen Strom diagonal angeordnet werden kann.

10. Vorrichtung nach Anspruch 9, bei der der Führungsschieber (15) vier Plattenglieder umfasst, die jeweils separat positionierbar sind und wobei für aufeinander folgende Produkte eine separate gewünschte Drehung und/oder ein Durchlass erhalten werden kann.

11. Vorrichtung nach einem der vorangehenden Ansprüche, bei dem die Mustersteuereinheit auch die Geschwindigkeiten der Förderer (10,11) steuert.

12. Verwendung einer Vorrichtung nach einem der vorangehenden Ansprüche zum Verlagern im Wesentlichen blockförmiger Produkte (100) aus einem kontinuierlichen Strom derartiger Produkte auf einem ersten Förderer (10) zu einem zweiten Förderer (11), um damit mustermäßige Anordnungen der Produkte zu bilden.

13. Verwendung nach Anspruch 12, wobei die Produkte blockförmige Produkte (100), insbesondere Verpackungseinheiten oder Verpackungsboxen für Eier sind.

## Revendications

1. Appareil pour déplacer des produits sensiblement en forme de blocs (100) d'un courant continu de ces produits sur un premier transporteur (10) à un second transporteur (11) afin de former avec celui-ci des configurations desdits produits, dans lequel les produits (100) sont acheminés dans un plan de transport sur le premier transporteur (10) en avançant des éléments (1) se déplaçant à distance fixe au-dessus de ce plan de transport dans une direction de transport T,
**caractérisé en ce que** chaque élément d'avancement (1) comprend en outre un bras articulé (2) pour pousser un produit sur le plan de transport et une commande de bras articulé (3) pour faire tourner le bras articulé (2) autour d'un pivot d'articulation (4) ;
dans lequel le bras articulé (2) est aménagé du côté aval de cet élément d'avancement (1),
dans lequel ce bras articulé (2) peut être mis en rotation dans un plan sensiblement parallèle audit plan de transport et autour du pivot de bras articulé (4) situé sur l'un des côtés dudit premier transporteur (10),
de sorte que, à la suite de la rotation du bras articulé (2), les produits (100) soient soumis à un glissement latéral pour les faire passer du premier transporteur (10) sur le second transporteur (11) et soient ensuite soumis à une rotation d'un angle d'environ 90 °,
dans lequel ledit second transporteur (11) est aménagé au moins en partie et sensiblement à la même hauteur de manière adjacente au premier, du côté mentionné ci-dessus, et
dans lequel, en outre, une unité de commande de configuration est formée de manière à commander au moins la commande de bras 'articulé (3) pour composer des combinaisons souhaitées avec celle-ci de m produits, transportés uniquement dans la direction de transport T, et de n produits soumis à un glissement latéral et à une rotation, m et n étant des nombres naturels, chacun ≥ 0.

2. Appareil selon la revendication 1, dans lequel la commande de bras articulé (3) comprend une commande à coulisse.

3. Appareil selon la revendication 2, dans lequel le bras articulé (2) et la commande à coulisse (3) sont compris dans le même logement de l'élément d'avancement, tandis que le logement de l'élément d'avancement est formé en corps formant bande perpendiculaire à la direction de transport T.

4. Appareil selon la revendication 3, dans lequel la commande à coulisse (3) comprend une bielle de raccordement (31) et une tige poussoir (32),
dans lequel la tige poussoir (32) s'étend dans ladite direction perpendiculaire et peut effectuer un mouvement réciproque entre une position de repos et une position de refoulement, et dans lequel la bielle de raccordement (31) est raccordée à rotation, à une extrémité, à la tige poussoir et, à l'autre extrémité, autour d'un pivot de tige de raccordement sur le bras articulé, dans lequel, pour ladite autre extrémité, le pivot de tige de raccordement correspondant est situé sur le bras articulé en aval par rapport audit pivot de bras articulé.

5. Appareil selon la revendication 4, dans lequel, en cas de rotation, lors dudit mouvement réciproque, l'extrémité de la tige poussoir (32) distante de la tige de raccordement (31) est guidée le long d'une courbe, tandis qu'un profilé d'attaque (12) et un profilé de sortie (13) se succèdent successivement.

6. Appareil selon la revendication 5, dans lequel chacun desdits profilés (12, 13) est aménagé sur une table de levage qui peut être relevée pour suivre le profilé et vice versa.

7. Appareil selon l'une quelconque des revendications 5 ou 6, dans lequel les profilés (12, 13) sont en forme de coin, le profilé d'attaque divergeant en forme de coin et le profilé de sortie s'amincissant en pointe.

8. Appareil selon l'une quelconque des revendications précédentes, dans lequel il est compris en outre un poussoir de guidage (15) qui est commandé par l'unité de commande de configuration et qui permet une rotation des produits en forme de blocs dans un sens opposé au sens de rotation obtenu par ce bras articulé.

9. Appareil selon la revendication 8, dans lequel le poussoir de guidage (15) comprend au moins une seule pièce en plaque verticale qui peut être positionnée en diagonale à une distance bien définie au-dessus de la surface de transport dudit premier transporteur (10) dans ledit courant continu.

10. Appareil selon la revendication 9, dans lequel le poussoir de guidage (15) comprend quatre pièces en plaques qui peuvent chacune être positionnées séparément, tandis que, par suite, pour des produits successifs, on obtient une rotation et/ou un passage souhaité(e) séparé(e).

11. Appareil selon l'une quelconque des revendications précédentes, dans lequel l'unité de commande de configuration commande en outre les vitesses desdits transporteurs (10, 11).

12. Utilisation d'un appareil selon l'une quelconque des revendications précédentes pour déplacer des produits sensiblement en forme de blocs (100) depuis un courant continu de ces produits sur un premier transporteur (10), vers un second transporteur (11) pour former avec celui-ci des configurations desdits produits.

13. Utilisation selon la revendication 12, dans laquelle les produits sont des produits en forme de blocs (100), en particulier des unités d'emballage ou des boîtes d'emballage d'oeufs.
